# EUROPÄISCHE PATENTANMELDUNG

(11) **EP 0 718 138 A1**
(43) Veröffentlichungstag der Anmeldung: **26.06.1996**
(21) Anmeldenummer: 95890219.9
(22) Anmeldetag: 18.12.1995
(51) Int. Cl.: B60K 6/12

(54) **Hybridantrieb für Kraftfahrzeuge und Verfahren zu seinem Betrieb**

(30) Priorität: 23.12.1994 AT 2400/94
(71) Anmelder: ÖKOMOBIL Gesellschaft für ökologische Technologien für Fahrzeuge, Gesellschaft m.b.H, A-1010 Wien (AT)
(72) Erfinder: Thurner, Jörg, A-1050 WIEN (AT)
(74) Vertreter: Collin, Hans, Dipl.-Ing. Dr.

(57) **Zusammenfassung**

Die Erfindung betrifft einen Hybridantrieb für Kraftfahrzeuge, die einen drehzahlregelbaren Verbrennungs- oder Elektromotor haben, der mittels einer Kupplung und eines Getriebes in Wirkverbindung mit der Antriebswelle bringbar ist, sowie ein Verfahren zu seinem Betrieb in einem Kraftfahrzeug. Der Hybridantrieb ist in der Form ausgebildet, daß zwischen Kupplung (1) und Getriebe (2) ein mechanisch auf die Getriebewelle (3) als Antrieb, neutral oder als Abtrieb wirkendes, in sich geschlossenes Fluidsystem (4) geschaltet ist, dessen mechanische Wirkungsrichtung durch ein Regelsystem (5,9) in Abhängigkeit von Fahrparametern zur Minimierung des Gesamtenergieaufwandes für den Fahrbetrieb regelbar ist.

## Beschreibung

Die Erfindung befaßt sich mit einem Hybridantrieb für Kraftfahrzeuge, die einen drehzahlregelbaren Verbrennungs- oder Elektromotor haben, der mittels einer Kupplung und eines Getriebes in Wirkverbindung mit der Antriebswelle bringbar ist. Solche Antriebe sind in einer größeren Anzahl von Ausführungsarten bekannt, wobei aber ein hoher technischer Aufwand erforderlich ist, der einer Einsparung von Antriebsenergie entgegensteht. Zielsetzung der vorliegenden Erfindung ist es, mit einem niedrigen technischen Aufwand einen hohen Einsparungseffekt zu erreichen und den Antrieb so auszuführen, daß ein Einsatz bei der Masse der handelsüblichen Kraftfahrzeuge ermöglicht wird.

Das Erfindungskennzeichen des neuen Hybridantriebes für Kraftfahrzeuge besteht darin, daß zwischen Kupplung und Getriebe ein mechanisch auf die Getriebewelle als Antrieb, neutral oder als Abtrieb wirkendes, in sich geschlossenes Fluidsystem geschaltet ist, dessen mechanische Wirkungsrichtung durch ein Regelsystem in Abhängigkeit von Fahrparametern zur Minimierung des Gesamtenergieaufwandes für den Fahrbetrieb regelbar ist.

Gemäß einer bevorzugten Ausführungsform der Erfindung ist das Fluidsystem aus einer mit der Getriebewelle direkt oder indirekt verbundenen Fluidpumpe, die auch als Motor betreibbar ist, mindestens einem mit der Pumpe verbundenen, vorzugsweise für einen Druck von etwa 300 bis 500 bar ausgelegten, Hochdruckspeicher und mindestens einem mit der Pumpe verbundenen, vorzugsweise für einen Druck von etwa 0,2 bis 5 bar ausgelegten, Niederdruckspeicher gebildet, wobei durch die Fluidpumpe Fluid vom Niederdruckspeicher zum Hochdruckspeicher bewegbar ist und die Fluidpumpe durch Fluid, das vom Hochdruckspeicher zum Niederdruckspeicher strömt, bewegbar ist.

Das für den erfindungsgemäßen Hybridantrieb erforderliche Regelsystem ist gemäß einem weiteren Erfindungsmerkmal aus einer Steuerelektronik und aus einer in der Fluidpumpe angeordneten, stufenlos von einer Neutralstellung aus in eine positive bzw. negative Schwenkrichtung verstellbaren Schwenkvorrichtung gebildet, mit der das geometrische Schluckvolumen der im System befindlichen Fluidpumpe stufenlos von einer Neutralstellung aus in eine positive, d.h. den Hochdruckspeicher ladende, bzw. negative, d.h. den Hochdruckspeicher entladende, Förderrichtung verstellt werden kann.

Die Erfindung betrifft auch ein Verfahren zum Betrieb eines in ein Fahrzeug eingebauten erfindungsgemäßen Hybridantriebs. Dieses Verfahren ist gekennzeichnet durch das Beschleunigen des stehenden Fahrzeugs durch den Verbrennungs- oder Elektromotor bei Neutralstellung der Schwenkvorrichtung, das bei Unterschreiten einer vorgegebenen Leistung, insbesondere der maximalen Leistung, des Verbrennungs- oder Elektromotors nachfolgende Schwenken der Schwenkvorrichtung in die positive Richtung und damit verbundenes Auffüllen des Hochdruckspeichers, und das nachfolgende Schwenken der Schwenkvorrichtung in die negative Richtung und damit verbundenes Umschalten der Fluidpumpe in den Betrieb als Motor bei Auftreten einer Fahrsituation, in der eine hohe Leistung, insbesondere Höchstleistung, des Fahrzeugantriebs erforderlich ist.

Eine bevorzugte Ausgestaltung des erfindungsgemäßen Verfahrens ist dadurch gekennzeichnet, daß bei erreichtem vorgegebenem Füllwert des Hochdruckspeichers und nicht beschleunigender Bewegung, insbesondere Stillstand, des Fahrzeugs der Verbrennungs- oder Elektromotor abgeschaltet wird, wobei bei Verwendung eines Verbrennungsmotors dieser ausgekuppelt wird, und ein nachfolgender Beschleunigungs-, insbesondere Anfahrvorgang mit der als Motor geschalteten Fluidpumpe durchgeführt wird.

Weiters erweist es sich als zweckmäßig, wenn zur Erzielung erhöhter Beschleunigung die Steuerelektronik vom Fahrer so beeinflußbar ist, daß der Antrieb des Fahrzeugs gleichzeitig durch den Verbrennungs- oder Elektromotor und die Fluidpumpe erfolgt.

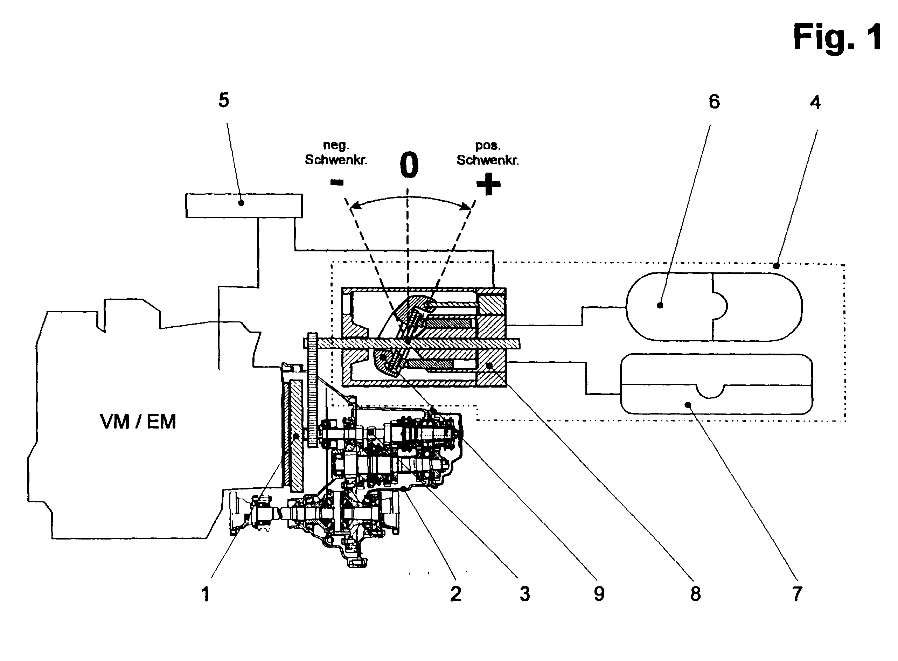

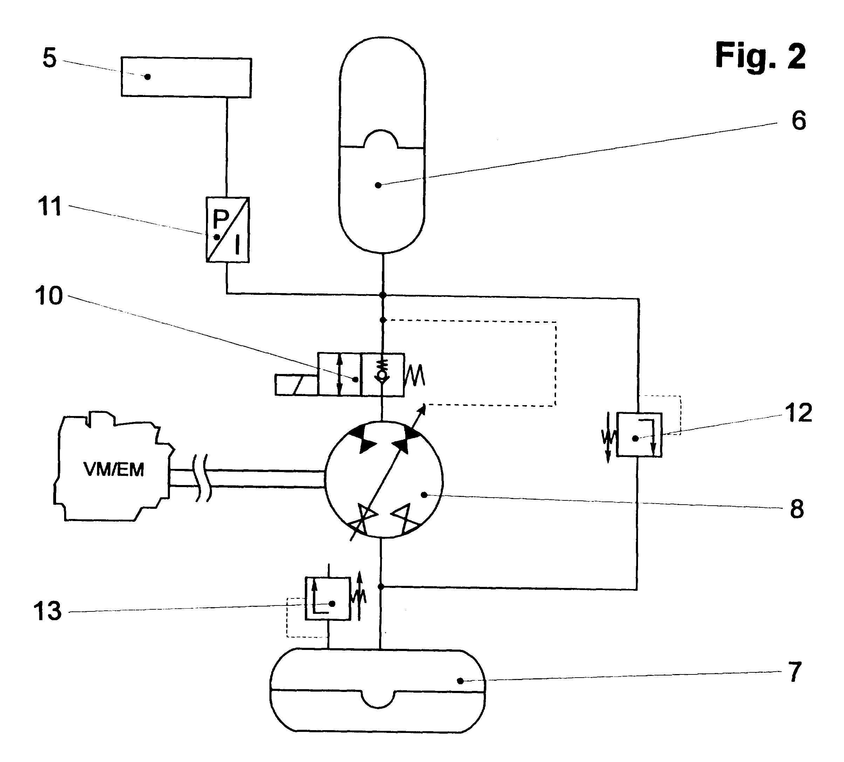

Die Erfindung wird nun unter Bezugnahme auf die Zeichnungen näher erläutert; es zeigen: Fig. 1 eine Ausführungsform der Erfindung im Querschnitt und Fig. 2 einen Schaltplan für das Fluidsystem.

In Fig. 1 ist ein mit VM (VM für Verbrennungsmotor bzw. EM für Elektromotor) bezeichneter Verbrennungsmotor handelsüblicher Bauart mit der zugeordneten Kupplung 1, dem Getriebe 2 und der Getriebewelle 3 im Querschnitt dargestellt. Zwischen der Kupplung 1 und dem Getriebe 2 ist ein in sich geschlossenes Fluidsystem so geschaltet, daß es mit der Getriebewelle 3 als Antrieb, neutral wirkend oder als Abtrieb zusammenwirkt. Dabei ergibt positive Schwenkrichtung die Funktion als Abtrieb, negative Schwenkrichtung als Fahrzeugantrieb und 0 - Stellung den Stillstand des Fluids und damit die Neutralfunktion für die Getriebewelle 3. Das Fluidsystem wird aus einem Hochdruck-Speicher 6, der bevorzugt bis etwa 500 bar Arbeitsdruck aufgeladen werden kann, und einem von 0,2 bis etwa 5 bar Arbeitsdruck ausgelegten Niederdruck-Speicher 7 sowie einer dazwischen angeordneten, auch als Motor betreibbaren Fluidpumpe 8 gebildet. Das Regelsystem, dessen Steuerelektronik 5 auf eine in der Pumpe 8 befindliche Schwenkvorrichtung 9 einwirkt, steuert derart, daß das geometrische Schluckvolumen des im System befindlichen Fluids stufenlos von einer Neutralstellung aus in eine positive bzw. negative Schwenkrichtung verstellt werden kann, wie dies in Fig. 1 mit strichlierten Linien dargestellt ist.

Um die Funktionsweise des erfindungsgemäßen Hybridantriebs deutlich aufzuzeigen, sollen Praxisvorgänge wie folgt beschrieben werden.

Ausgegangen wird zunächst davon, daß bei einem in erfindungsgemäßer Weise ausgestattetem Kraftfahrzeug das stehende Automobil in Betrieb genommen wird. Durch den Anlasser gestartet, beginnt der Verbrennungsmotor VM im Leerlauf zu arbeiten. Das erfindungsgemäße Regelsystem zeigt als Annahme die Stellung 0, d.h. aufgrund der vorhandenen Sperre im Sperrventil 10 kann Fluid zunächst weder in der einen, noch in der anderen Richtung fließen. Zum Losfahren wird die Drehzahl des Motors VM gesteigert, ein Gang eingelegt und langsam ausgekuppelt. Ab einer vorbestimmten Drehzahl des Motors wird über die Steuerelektronik 5 die Schwenkvorrichtung 9 zur positiven Schwenkrichtung verschoben. Gleichzeitig wird das Sperrventil 10 geöffnet und vom Fluid wird der Hochdruckspeicher 6 je nach der dafür vorgesehenen Teilfüllung bis zum Erreichen derselben aufgeladen. Grund für eine bloße Teilfüllung des Speichers 6 ist der Umstand, daß es bevorzugt wird, als Speicherenergie die im Fahrbetrieb erforderlichen Bremsvorgänge heranzuziehen und dafür etwa 20 - 30% der Speicherkapazität vorzusehen. Zu betonen ist ferner, daß jeweils nur ein geringer Anteil der vom Verbrennungsmotor VM gelieferten Energie von der Getriebewelle 3 für die teilweise Füllung des Hochdruckspeichers 6 herangezogen wird, nämlich nur soviel, daß sich dies im Fahrverhalten des Kraftfahrzeuges kaum auswirkt. Ist einmal die volle Kapazität von etwa 500 bar im Hochdruck-Speicher 6 erreicht, so bedeutet dies zugleich eine Entleerung des Niederdruck-Speichers 7 auf den dafür vorgesehenen Minimalwert von 0,2 bar.

Im Regelfall, nämlich dann, wenn für den Fahrer zum Zeitpunkt voller Aufladung des Speichers 6 kein Überholvorgang ansteht, wird von der Steuerelektronik 5 der Verbrennungs- oder Elektromotor VM bzw. EM abgeschaltet. In jedem Fall wird durch eine Umkehr der Schwenkvorrichtung 9 in die negative Schwenkrichtung die Hydraulikpumpe 8 als Motor für den Fahrzeugantrieb umgeschaltet. Dabei kehrt sich die Strömungsrichtung des Fluids um und dieses füllt nun den Niederdruck-Speicher 7 bis zu seiner Normalkapazität wieder auf.

Weil dem Fahrer die Speicherkapazität im Cockpit angezeigt wird, kann er dann, wenn genügend Speicherkapazität im Hochdruckspeicher 6 angezeigt ist, die Steuerelektronik 5 so beeinflussen, daß beide Antriebsarten gleichzeitig eingesetzt werden, wodurch etwa Überholvorgänge aufgrund der somit stark erhöhten Antriebskraft wesentlich rascher abgewickelt werden können.

Das in Fig. 2 dargestellte Schaltschema zeigt dem Fachmann die Schaltung des Fluidsystems deutlich auf. Ergänzend zur bisherigen Erläuterung von Fig. 1 ist hier noch auf den Druckaufnehmer 11 und auf die von den technischen Aufsichtsbehörden vorgeschriebenen Sicherheitsventile, nämlich das Sicherheitsventil 12 für den Hochdruck-Speicher 6 und das Ventil 13 für den Niederdruck-Speicher 7 hinzuweisen.

Mittels der vorgeschlagenen neuen Technologie wird es ermöglicht, bei den derzeit handelsüblichen Kraftfahrzeugen je nach den Fahrverhältnissen eine Energieeinsparung von bis zu 50% mit einem bescheidenen technischen Aufwand zu erreichen, wobei in der Regel der Spareffekt umso größer ist, je höher die Verbrauchswerte ansonsten - etwa beim Fahren im Stadtverkehr oder bei Stauverhältnissen liegen.

## Patentansprüche

1. Hybridantrieb für Kraftfahrzeuge, die einen drehzahlregelbaren Verbrennungs- oder Elektromotor haben, der mittels einer Kupplung und eines Getriebes in Wirkverbindung mit der Antriebswelle bringbar ist, dadurch gekennzeichnet, daß zwischen Kupplung (1) und Getriebe (2) ein mechanisch auf die Getriebewelle (3) als Antrieb, neutral oder als Abtrieb wirkendes, in sich geschlossenes Fluidsystem (4) geschaltet ist, dessen mechanische Wirkungsrichtung durch ein Regelsystem (5,9) in Abhängigkeit von Fahrparametern zur Minimierung des Gesamtenergieaufwandes für den Fahrbetrieb regelbar ist.

2. Hybridantrieb nach Anspruch 1, dadurch gekennzeichnet, daß das Fluidsystem (4) aus einer mit der Getriebewelle (3) direkt oder indirekt verbundenen Fluidpumpe (8), die auch als Motor betreibbar ist, mindestens einem mit der Pumpe (8) verbundenen, vorzugsweise für einen Druck von etwa 300 bis 500 bar ausgelegten, Hochdruckspeicher (6) und mindestens einem mit der Pumpe (8) verbundenen, vorzugsweise für einen Druck von etwa 0,2 bis 5 bar ausgelegten, Niederdruckspeicher (7) gebildet ist, wobei durch die Fluidpumpe (8) Fluid vom Niederdruckspeicher (7) zum Hochdruckspeicher (6) bewegbar ist und die Fluidpumpe durch Fluid, das vom Hochdruckspeicher (6) zum Niederdruckspeicher (7) strömt, bewegbar ist.

3. Hybridantrieb nach Anspruch 1 oder 2, dadurch gekennzeichnet, daß das Regelsystem aus einer Steuerelektronik (5) und aus einer in der Fluidpumpe (8) angeordneten, stufenlos von einer Neutralstellung aus in eine positive bzw. negative Schwenkrichtung verstellbaren Schwenkvorrichtung (9) gebildet ist, mit der das geometrische Schluckvolumen der im System befindlichen Fluidpumpe stufenlos von einer Neutralstellung aus in eine positive, d.h. den Hochdruckspeicher (6) ladende, bzw. negative, d.h. den Hochdruckspeicher (6) entladende, Förderrichtung verstellt werden kann.

4. Verfahren zum Betrieb eines in ein Fahrzeug eingebauten Hybridantriebs gemäß den kennzeichnenden Teilen der Ansprüche 1 bis 3, gekennzeichnet durch das Beschleunigen des stehenden Fahrzeugs durch den Verbrennungs- oder Elektromotor bei Neutralstellung der Schwenkvorrichtung (9), das bei Unterschreiten einer vorgegebenen Leistung, insbesondere der maximalen Leistung, des Verbrennungs- oder Elektromotors nachfolgende Schwenken der Schwenkvorrichtung in die positive Richtung und damit verbundenes Auffüllen des Hochdruckspeichers (6), und das nachfolgende Schwenken der Schwenkvorrichtung (9) in die negative Richtung und damit verbundenes Umschalten der Fluidpumpe (8) in den Betrieb als Motor bei Auftreten einer Fahrsituation, in der eine hohe Leistung, insbesondere Höchstleistung, des Fahrzeugantriebs erforderlich ist.

5. Verfahren nach Anspruch 4, dadurch gekennzeichnet, daß bei erreichtem vorgegebenem Füllwert des Hochdruckspeichers (6) und nicht beschleunigender Bewegung, insbesondere Stillstand, des Fahrzeugs der Verbrennungs- oder Elektromotor abgeschaltet wird, wobei bei Verwendung eines Verbrennungsmotors dieser ausgekuppelt wird, und ein nachfolgender Beschleunigungs-, insbesondere Anfahrvorgang mit der als Motor geschalteten Fluidpumpe (8) durchgeführt wird.

6. Verfahren nach Anspruch 4 oder 5, dadurch gekennzeichnet, daß zur Erzielung erhöhter Beschleunigung die Steuerelektronik (5) vom Fahrer so beeinflußbar ist, daß der Antrieb des Fahrzeugs gleichzeitig durch den Verbrennungs- oder Elektromotor und die Fluidpumpe (8) erfolgt.
